# DEMANDE DE BREVET EUROPEEN

(11) **EP 3 843 409 A1**
(43) Date de publication de la demande: **30.06.2021**
(21) Numéro de dépôt: 20216850.6
(22) Date de dépôt: 23.12.2020
(51) Int. Cl.: H04N 21/234, H04N 19/149, H04N 19/152, H04N 19/132, H04N 19/172

(54) **PROCEDE D'ALLOCATION POUR LIAISON BAS-DEBIT**

(30) Priorité: 26.12.2019 FR 1915624
(71) Demandeur: THALES, 92400 Courbevoie (FR)
(72) Inventeur: BERGERON, Cyril, 92622 GENNEVILLIERS CEDEX (FR); ESSE, Alexandre, 92622 GENNEVILLIERS CEDEX (FR); RAVERA, Bertrand, 92622 GENNEVILLIERS CEDEX (FR)
(74) Mandataire: Marks & Clerk France

(57) **Abrégé**

Procédé et système pour asservir le contenu d'un flux vidéo contenant plusieurs images F₁, .., Fₙ, sur un lien de transmission contraint en débit dans un dispositif comprenant un buffer vidéo entrée (21), suivi d'un codeur vidéo (22) prédictif dont la sortie est reliée à un buffer vidéo sortie (23), le buffer vidéo sortie étant relié à un buffer radio (25) de capacité connue, caractérisé en ce qu'il comporte au moins les étapes suivantes :
- Estimer au niveau du buffer vidéo sortie (23), un paramètre associé au taux d'occupation Tr du buffer radio (25) et modifier le contenu du buffer vidéo en entrée de la manière suivante :
- Si le paramètre estimé vérifie un seuil prédéfini, alors transmettre les images contenues dans le buffer vidéo entrée au codeur vidéo au fur et à mesure,
- Si le paramètre estimé n'est pas conforme au seuil prédéfini, alors modifier le contenu du buffer vidéo entrée en modifiant l'image Fi+1 à compresser de façon à adapter ledit contenu au taux d'occupation du buffer radio.

## Description

L'invention concerne un procédé d'allocation de contenu vidéo sur un lien de communication à débit contraint. L'invention s'applique par exemple dans des systèmes de radiocommunication à bas-débit ou débit contraint.

Les contraintes de débit sont très fortes en termes de débit pour faire transiter une vidéo temps-réel sur une liaison radio bas-débit (ou contrainte).

L'art antérieur décrit différentes techniques d'allocation débit-distorsion (Rate Distorsion Optimization ou RDO).

La demande de brevet US10116989 décrit une technique d'allocation RDO qui se place au niveau du décodeur avant l'affichage ou « display » afin de rattraper le délai temps entre la capture du flux et l'image, ou en anglo-saxon « time to glass ».

Le brevet CA3001672 décrit une méthode d'allocation qui change de résolution dynamiquement en fonction du débit, afin de satisfaire des contraintes de débit du système.

La demande de brevet US2015350654 divulgue une technique d'allocation qui change de débit trame (images/sec) en fonction des capacités du décodeur du récepteur et non du débit requis.

Ces techniques ne sont pas toujours efficaces pour les raisons suivantes :
- Dans le cas de la RDO, la résolution et le débit trame, i.e., le nombre d'images à compresser par seconde sont fixés,
- Ces solutions se font de plus intrinsèquement à l'intérieur du module de compression vidéo et donc nécessite de modifier la structure du composant de compression,
- Les méthodes décrites dans l'art antérieur ne tiennent pas compte des contraintes fortes de débit contraint, notamment dans le domaine des radiocommunications.

Dans un système de compression vidéo classique, chaque image codée peut avoir un débit compressé différent d'une image à l'autre, on parle alors de débit instantané. Généralement, on parle de débit moyen lorsque l'on calcule la moyenne de ces débits instantanés sur une fenêtre temporelle (généralement de quelques secondes). Dans une application « classique » où l'on s'octroie de la latence avec une mise en buffer importante (temps entre la compression et l'envoi, schéma retrouvé de manière symétrique côté récepteur : réception et décodage), on peut se permettre de compresser les images les unes après les autres, en supposant que l'on va pouvoir se rattraper en adaptant le débit instantané des trames suivantes, et en supposant que les paquets seront conservés dans une mémoire et correctement envoyés par le système de transmission.

Le problème dans un système à débit contraint, est qu'il n'est pas adapté à supporter des « pics » de débit instantané trop important pouvant survenir au niveau d'une succession d'images compressées. Le système ne parvient pas à mettre en mémoire (ou buffériser) les trames et il risque de perdre des paquets pourtant parfaitement constitués. Ces pertes de paquets avant émission sont préjudiciables après transmission au niveau du décodage et de la reconstitution des images transmises.

Dans les systèmes classiques de vidéos sur IP (internet) comme la VOD, il y a toujours une mémoire suffisamment grande pour supporter les variations de débit.

Dans un système de compression classique de type MPEG et, hormis les trames que l'on nomme « Intra » (codées intrinsèquement), les images sont compressées en utilisant les images précédentes afin de réduire la quantité d'information en ne codant, plus ou moins, que la différence existant entre le contenu des images et en utilisant des schémas prédictifs (on parle de trames « Inter »). Quand on compresse une image, on utilise des outils, offerts par la norme de compression, qui vont permettre de représenter l'image en utilisant un minimum de bits. Dans ces outils, il existe des schémas dits prédictifs, qui permettent de donner une approximation des pixels de l'image puis de coder les résidus (c.-à-d. la différence entre la prédiction et les valeurs de pixels considérés blocs par blocs) qui peuvent être (ou pas) projetés dans un espace dit fréquentiel. La projection se fait à travers un calcul matriciel connu de l'homme du métier comme par exemple la transformée cosinus discrète, i.e., DCT en anglais. Ces coefficients (ou les valeurs de résidus s'il n'a pas été jugé intéressant d'utiliser la transformée fréquentielle) sont ensuite approximés par une quantification, ce qui permet de coder uniquement des valeurs de plus petite amplitude. Ainsi, la compression est plus efficace en termes de bits par le codeur entropique, qui est la dernière étape de compression vidéo puisqu'elle crée le « bitstream » final qui sera encapsulé dans un paquet associé à une image, c'est ce que l'on appelle une image compressée. En changeant le pas de quantification, on modifie la quantité d'informations conservée à compresser. Plus le pas de quantification est grand, plus on approxime les valeurs considérées, et plus on crée de la distorsion (la qualité reconstituée sera plus faible). Plus la compression sera efficace plus le débit instantané sera faible. On parle alors de compromis débit-distorsion. Dans un schéma classique, le fait de moduler le pas de quantification est connu de l'homme du métier, puisque c'est le paramètre par lequel les codeurs fonctionnent pour satisfaire une consigne de débit moyen d'une séquence vidéo compressée.

Pour des applications « classiques », les codeurs supposent que l'on peut être plus « flexible » vis-à-vis du débit instantané, et considérer un débit moyen sur un intervalle temporelle relativement important (i.e., nombre d'images considéré pour calculer le débit moyen est grand), les systèmes de transmission IP supportant des latences et des capacités de mise en mémoire beaucoup plus importantes que les systèmes qui sont fortement contraints en débit et limités en taille de mémoire de buffer.

Dans la suite de la description, les expressions « buffer vidéo entrée » et « buffer images » désignent le même module.

Le procédé selon l'invention consiste notamment à utiliser un processus d'asservissement à boucle fermée pour réguler l'entrée d'un codeur vidéo (compression prédictive) recevant des images d'un buffer vidéo entrée, afin d'adapter les images à la capacité d'un buffer radio disposé après le buffer vidéo sortie et avant transmission dans un système de communication.

L'invention concerne un procédé pour asservir le contenu d'un flux vidéo contenant plusieurs images F₁, .., Fₙ, sur un lien de transmission bas-débit dans un dispositif comprenant un buffer vidéo entrée, suivi d'un codeur vidéo prédictif dont la sortie est reliée à un buffer vidéo sortie, le buffer vidéo sortie étant relié à un buffer radio de capacité connue, caractérisé en ce qu'il comporte au moins les étapes suivantes :
- Estimer au niveau du buffer vidéo sortie, un paramètre P(Tr) associé au taux d'occupation Tr du buffer radio et modifier le contenu du buffer vidéo entrée de la manière suivante :
- Si le paramètre P(Tr) associé au taux d'occupation Tr estimé vérifie un seuil prédéfini, alors transmettre les images contenues dans le buffer vidéo entrée au codeur vidéo au fur et à mesure,
- Si le paramètre estimé n'est pas conforme au seuil prédéfini, alors modifier le contenu du buffer vidéo entrée en modifiant l'image Fi+1 à compresser de façon à adapter ledit contenu au taux d'occupation Tr du buffer radio, par exemple en remplaçant l'image à compresser par une ou plusieurs images.

On estime, par exemple, la valeur du taux d'occupation Tr en temps réel et on compare cette valeur à une valeur seuil de taux d'occupation prédéfinie.

On peut aussi estimer la variation du taux d'occupation Tr sur un intervalle de temps donné et si la variation du taux d'occupation Tr est continue et dépasse une valeur seuil, modifier le contenu du buffer vidéo entrée.

On modifie le contenu du buffer d'entrée, par exemple, en remplaçant une ou plusieurs fois une image à coder par une ou plusieurs images précédemment codées, choisies parmi les images présentes dans le buffer image.

Selon une variante de réalisation, on vérifie la qualité de l'image présente dans le buffer et on remplace l'image en cours en utilisant une image dont les contours sont les plus nets.

On peut remplacer l'image en cours dans le buffer vidéo en entrée en utilisant une image contenant une information utile pour la restitution au niveau du décodeur, telle qu'une image contenant des informations critiques dans les images sélectionnées au niveau du buffer entrée vidéo.

Le buffer image peut être utilisé en compressant de manière régulière des images différentes afin d'éviter une coupure dans la transmission.

Le pas de quantification du codeur vidéo peut être modifié pour une image remplacée au niveau du buffer.

Le procédé est utilisé pour asservir le contenu d'un flux vidéo dans un système radio avant transmission vers le système de communication.

L'invention concerne aussi un système pour asservir le contenu d'un flux vidéo au sein d'un dispositif comprenant une caméra, un codeur vidéo prenant en entrée des images issues d'un buffer vidéo entrée et générant des images compressées selon un modèle prédictif vers un buffer vidéo sortie, ledit buffer vidéo sortie transmettant ces images compressées vers un buffer radio caractérisé en ce que :
- Le buffer vidéo sortie est configuré pour quantifier le nombre de paquets issus des images compressés et pour le transmettre à un dispositif de contrôle de flux vidéo,
- Le dispositif de contrôle de flux vidéo est configuré pour estimer un paramètre P(Tr) associé au taux d'occupation Tr du buffer radio et à émettre un ordre au buffer vidéo entrée afin que ce dernier modifie les images à transmettre dans le cas où le paramètre associé estimé n'est pas conforme à un seuil prédéfini en exécutant les étapes du procédé selon l'invention.

Le buffer vidéo entrée peut comprendre un filtre de sélection des images afin de sélectionner les images présentant une information utile pour la restitution au niveau du décodeur.

D'autres caractéristiques, détails et avantages de l'invention ressortiront à la lecture de la description faite en référence aux dessins annexés donnés à titre d'exemples illustratifs et nullement limitatifs et qui représentent, respectivement :
[Fig.1] Une illustration d'une succession de trames Intra et de trames Prédites dans un diagramme débit-temps,
[Fig.2] Un exemple de dispositif selon l'invention disposé en amont d'une radio et d'un système de communication.

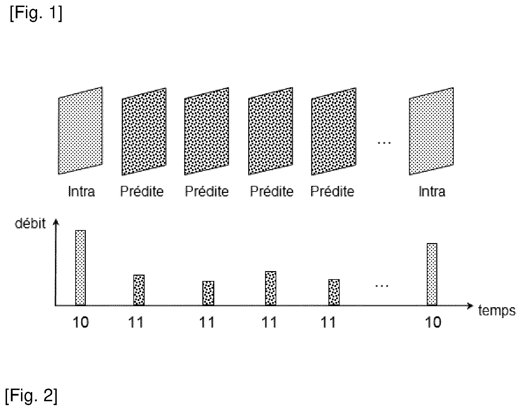

La figure 1 est un rappel d'organisation intrinsèque du schéma de compression par un codeur vidéo avec prédiction, avec des trames Intra codées 10 de manière intrinsèque, le codage n'utilise pas le passé et ne requiert pas un débit important et des trames prédites 11 (GOP) dont le codage utilise le passé et demande dans la plupart des cas un débit plus bas.

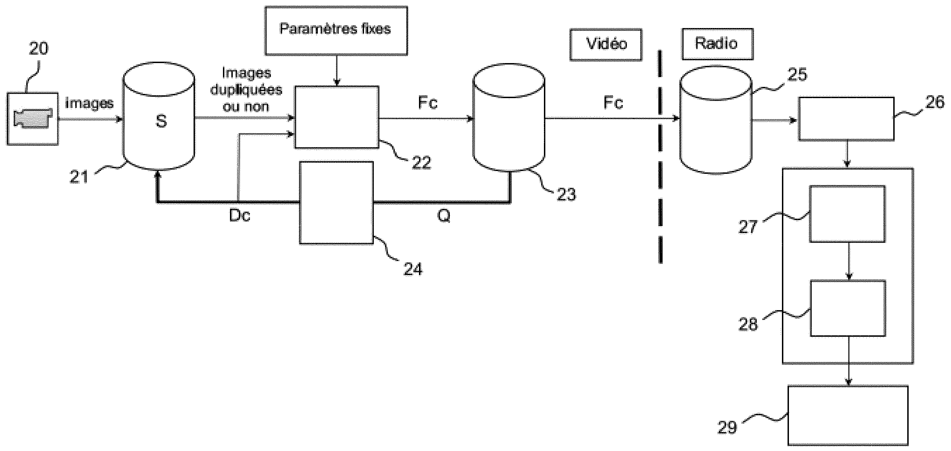

La figure 2 illustre un exemple de système permettant de modifier un buffer d'entrée pour une transmission vidéo sur radio avec un codeur vidéo avec compression prédite.

.Une caméra vidéo 20 acquiert des images et les transmet à un premier buffer vidéo 21 dont la sortie est reliée à un codeur vidéo 22. La sortie du codeur vidéo 22 est transmise au buffer vidéo de sortie 23 en sortie duquel les trames compressées F_{c} sont transmises à une pile FIFO buffer radio 25 et des informations Q de débit instantané sont transmises à un contrôleur de débit 24. Le contrôleur de débit 24 possède une sortie qui transmet des décisions de codage d'une part au buffer vidéo d'entrée et d'autre part au codeur vidéo.

La pile FIFO 25 est reliée à un dispositif de mise en paquets 26 avant transmission à un modulateur 27 pour mise en forme avec une forme d'onde, avant conversion numérique analogique 28 et transmission vers un système de communication radio 29.

Le buffer d'entrée images (buffer vidéo entrée) reçoit le flux d'images F_{I} transmis par la caméra 20 et un ordre D_{c} du contrôleur de débit vidéo pour adapter le contenu du buffer entrée images en fonction notamment du taux de remplissage Tr du buffer radio. Le buffer entrée images peut comporter un filtre S connu de l'homme du métier ayant notamment pour fonction de sélectionner la « meilleure » image, par exemple, l'image dont les contours sont les plus francs et qui permettront au niveau de la restitution (i.e. après décodage) une meilleure qualité visuelle.

Le codeur vidéo 22 reçoit des paramètres fixes tels que la résolution, le débit cible moyen à satisfaire. Le codeur vidéo peut suivre n'importe quel codeur ou codec vidéo connu de l'homme du métier, de type MPEG-2, H.264, HEVC, ou AV1. La structure du codeur n'est pas modifiée pour la mise en œuvre de base du procédé selon l'invention.

Le buffer vidéo sortie 23 contient le bitstream compressé de chaque image en vue d'être encodé sous un protocole de type IP/RTP (Internet/Protocol Real-Time Transport Protocol), par exemple.

Le contrôleur de débit vidéo 24 dispose des données suivantes : le type d'images à coder, Intra ou Prédite, les caractéristiques du buffer radio comme le débit moyen, la capacité mémoire du buffer en entrée de celui-ci et la cadence de transmission au sein de la radio.

L'idée du procédé selon l'invention consiste notamment à modifier le contenu du buffer image, i.e., les images à compresser par le codeur vidéo afin de « réguler » le flux d'images compressées par le codeur vidéo et transmis au buffer radio évitant ainsi la saturation de ce buffer ou à l'inverse l'épuisement de ce buffer où un nombre insuffisant d'images compressées à transmettre conduirait à une rupture du flux.

Un codeur vidéo code les images avec une cadence donnée, généralement de 25 ou 30 images par seconde. Le premier buffer image doit donc fournir régulièrement au codeur les images à coder. Dans le cas où le débit instantané risque de conduire à un dépassement des capacités du taux d'occupation du buffer radio, au lieu de compresser une nouvelle image, on pourra choisir parmi les images présentes dans le buffer image, une image que l'on souhaitera compresser plusieurs fois de suite mais pas nécessairement celle qui est la première dans la liste. Sans rentrer dans les détails, cela revient à simuler le fait que l'on baisse le nombre d'images par seconde (Frame Rate) artificiellement en entrée et on compresse le même nombre d'images par seconde au niveau du codeur.

Le buffer image contient les N images à compresser. Ces images proviennent de la caméra et elles sont transmises à une cadence donnée, par exemple de trente images par seconde. La cadence de transmission est fixée par la partie radio du système. Ces informations sont connues initialement par le dispositif de contrôle de débit.

Le procédé consiste notamment à estimer le taux de remplissage Tr du buffer radio, ou un paramètre P(Tr) associé, afin de décider de la modification du contenu du buffer vidéo images. Dans le cas où le buffer radio s'approche de la saturation (i.e. il dépasse un seuil paramétrable par l'utilisateur en fonction du système radio utilisé), le contrôleur de débit vidéo 24 va transmettre un ordre D_{c} au buffer vidéo entrée ou buffer images. L'ordre D_{c} donné consiste, par exemple, à dupliquer une image déjà compressée et de remplacer dans le buffer vidéo entrée une nouvelle image à compresser par cette image dupliquée afin de faciliter la compression, i.e., utiliser moins de débit. On satisfait ainsi la contrainte de débit imposé par le buffer radio. Dans le cas contraire, si le buffer radio est « vide » ou peu rempli, le contrôleur de débit vidéo pourra au contraire demander à utiliser le buffer image de manière régulière et systématique en compressant des images différentes, voire même de diminuer le pas de quantification utilisé par la compression afin d'éviter une quantité insuffisante de donnée bitstream à transmettre et de risquer une coupure dans la communication.

Pour contrôler la modification du buffer d'entrée, le procédé estime au niveau du buffer vidéo sortie, le taux d'occupation Tr du buffer radio ou un paramètre P(Tr) lié au taux d'occupation. Pour cela, le buffer de sortie peut comptabiliser le nombre de paquets et leur taille afin de prédire une valeur de taux d'occupation Tr pour le buffer radio. Le buffer vidéo sortie transmet cette information en temps réel au contrôleur de débit vidéo. Ce dernier connaît les capacités intrinsèques du système radio, (i.e., la taille du buffer radio et la cadence de transmission des données de la radio), et conserve en mémoire la ou les valeurs de taux d'occupation déterminées à un instant donné ou sur un intervalle de temps. Il est donc capable de décider s'il est nécessaire ou pas de modifier les paramètres de compression et de transmettre les images sans modification, ou bien de dupliquer momentanément une image, etc.

Lorsque la valeur du taux d'occupation Tr à l'instant courant dépasse une valeur seuil, Vₛₑᵤᵢₗ, alors le contrôleur de débit va donner comme instruction au buffer d'entrée images de ne pas transmettre au codeur vidéo la nouvelle image courante I_{cour}, mais de transmettre au codeur vidéo une image dupliquée (l'image ayant déjà été codée par le codeur vidéo). Le codage de cette image dupliquée requiert moins de ressource en débit.

L'estimation s'effectue selon un asservissement en boucle fermée, le buffer radio s'incrémente au fur et à mesure dans le temps jusqu'à atteindre un seuil de saturation.

Au contraire, lorsque le buffer radio ne comporte pratiquement plus de paquets à transmettre, en dessous d'un autre seuil, ceci peut conduire à une coupure dans la transmission des paquets.

La valeur seuil Vₛₑᵤᵢₗ est déterminée, par exemple, en fonction des caractéristiques du buffer radio et de la forme d'onde.

Il est aussi possible pour le contrôleur de débit de surveiller la variation du taux d'occupation du buffer radio mesuré en temps réel. Lorsque le contrôleur de débit remarque une augmentation significative ou une augmentation linéaire du taux d'occupation, il peut donner l'ordre au buffer d'entrée de modifier son contenu à transmettre au codeur vidéo.

Si le débit instantané est cohérent avec les capacités et le rythme d'envoi de la radio, alors on transmet au codeur vidéo l'image suivante comme dans un schéma classique, sinon, on efface l'image suivante dans le buffer d'entrée et on la remplace par la précédente comme expliqué précédemment.

Selon un mode de réalisation, il est possible au niveau du buffer vidéo entrée de vérifier la qualité d'une image présente dans le buffer et d'utiliser l'image la plus « nette » au sens vidéo classique, dont les contours sont les plus nets. Cette image sera alors utilisée comme image de substitution de l'image en cours. Le système permet de coder des images visuellement plus « significatives » au niveau du décodage. Cette vérification s'effectue par un filtre connu de l'homme du métier et ne sera donc pas détaillée n'étant pas l'objet de l'invention.

On pourra aussi utiliser comme critère pour remplacer l'image en cours, des images qui contiennent le plus d'informations utiles pour la restitution au niveau du décodeur. Par exemple, il sera possible de choisir les images qui contiennent le plus de visage pour de la vidéo surveillance, ou celles contenant des informations critiques dans les images sélectionnées au niveau du buffer image.

Dans certains cas, le contrôleur de débit vidéo enverra un ordre vers le codeur vidéo afin que ce dernier modifie le pas de quantification associé à cette image, si besoin. Ceci permettra de réduire (ou d'augmenter) la quantité d'informations à compresser et diminuer (ou accroître respectivement) le débit moyen.

A titre d'exemple, on considère que le buffer vidéo entrée contient 5 images F0, F1, F2, F3, F4, correspondant respectivement aux instants : k, k+1, k+2, k+3 et k+4.

Lorsque la valeur du débit instantané pour une image à l'instant k-1 a dépassé la consigne de débit de manière significative en dépassant un seuil prévu, et qu'il y a un risque de dépasser grandement momentanément les capacités de débit sur le lien de transmission (risque de pertes avant envoi), le procédé va remplacer dans le buffer les images F0, F1, F2, F3, F4, correspondant respectivement aux instants : k, k+1, k+2, k+3 et k+4, par des duplications de l'image F0 à l'instant k, pour les cinq images, ou bien remplacer dans le buffer les trois premières images avec l'image F0 et les deux dernières en utilisant F3 à l'instant k+3. Le choix dépendra du dépassement débit détecté.

Le procédé selon l'invention offre notamment les avantages suivants :

Permettre artificiellement de modifier le nombre de trames (« différentes ») à coder par seconde,

Réduire la quantité d'information (visuelle) à coder,

Ne nécessite aucune information a priori sur les contenus capturés.

## Revendications

1. Procédé pour asservir le contenu d'un flux vidéo contenant plusieurs images F₁, .., Fₙ, sur un lien de transmission bas-débit dans un dispositif comprenant un buffer vidéo entrée (21), suivi d'un codeur vidéo (22) prédictif dont la sortie est reliée à un buffer vidéo sortie (23), le buffer vidéo sortie étant relié à un buffer radio (25) de capacité connue, **caractérisé en ce qu'**il comporte au moins les étapes suivantes :
- Estimer au niveau du buffer vidéo sortie (23), un paramètre P(Tr) associé au taux d'occupation Tr du buffer radio (25) et modifier le contenu du buffer vidéo entrée (21) de la manière suivante :
- Si le paramètre P(Tr) associé au taux d'occupation Tr estimé vérifie un seuil prédéfini, alors transmettre les images contenues dans le buffer vidéo entrée au codeur vidéo au fur et à mesure,
- Si le paramètre estimé n'est pas conforme au seuil prédéfini, alors modifier le contenu du buffer vidéo entrée en remplaçant l'image Fi+1 à compresser par une ou plusieurs images de façon à adapter ledit contenu au taux d'occupation Tr du buffer radio.

2. Procédé selon la revendication 1 **caractérisé en ce que** l'on estime la valeur du taux d'occupation Tr en temps réel et on compare cette valeur à une valeur seuil de taux d'occupation prédéfinie.

3. Procédé selon l'une des revendications 1 ou 2 **caractérisé en ce que** l'on estime la variation du taux d'occupation Tr sur un intervalle de temps donné et si la variation du taux d'occupation Tr est continue et dépasse une valeur seuil, on modifie le contenu du buffer vidéo entrée.

4. Procédé selon l'une des revendications 1 à 3 **caractérisé en ce que** l'on modifie le contenu du buffer d'entrée en remplaçant une ou plusieurs fois une image à coder par une image précédemment codée et parmi les images présentes dans le buffer image.

5. Procédé selon l'une des revendications 1 à 3 **caractérisé en ce que** l'on vérifie la qualité de l'image présente dans le buffer et on remplace l'image en cours en utilisant une image dont les contours sont les plus nets.

6. Procédé selon l'une des revendications 1 à 3 **caractérisé en ce que** l'on remplace l'image en cours dans le buffer vidéo en entrée en utilisant une image contenant une information utile pour la restitution au niveau du décodeur, telle qu'une image contenant des informations critiques dans les images sélectionnées au niveau du buffer entrée vidéo.

7. Procédé selon l'une des revendications 1 à 3 **caractérisé en ce que** l'on utilise le buffer image en compressant de manière régulière des images différentes afin d'éviter une coupure dans la transmission.

8. Procédé selon l'une des revendications 1 à 6 **caractérisé en ce que** l'on modifie le pas de quantification du codeur vidéo pour une image remplacée au niveau du buffer.

9. Procédé selon l'une des revendications précédentes **caractérisé en ce que** l'on asservit le contenu d'un flux vidéo dans un système radio avant transmission vers le système de communication.

10. Système pour asservir le contenu d'un flux vidéo au sein d'un dispositif comprenant une caméra (20), un codeur vidéo (22) prenant en entrée des images issues d'un buffer vidéo entrée (21) et générant des images compressées selon un modèle prédictif vers un buffer vidéo sortie (23), ledit buffer vidéo sortie (23) transmettant ces images compressées vers un buffer radio (25) **caractérisé en ce que** :
- Le buffer vidéo sortie (23) est configuré pour quantifier le nombre de paquets issus des images compressées et pour le transmettre à un dispositif de contrôle (24) de flux vidéo,
- Le dispositif de contrôle de flux vidéo (24) est configuré pour estimer un paramètre P(Tr) associé au taux d'occupation Tr du buffer radio et à émettre un ordre au buffer vidéo entrée afin que ce dernier modifie les images à transmettre dans le cas où le paramètre associé estimé n'est pas conforme à un seuil prédéfini en exécutant les étapes du procédé selon la revendication 1.

11. Système selon la revendication 10 **caractérisé en ce que** le buffer vidéo entrée (21) comprend un filtre de sélection des images afin de sélectionner les images présentant une information utile pour la restitution au niveau du décodeur.
